# EUROPEAN PATENT APPLICATION

(11) **EP 1 981 201 A2**
(43) Date of publication of application: **15.10.2008**
(21) Application number: 08004981.0
(22) Date of filing: 17.03.2008
(51) Int. Cl.: H04L 1/00

(54) **Method and apparatus for decoding data in receiver of a digital broadcasting system**

(30) Priority: 15.03.2007 KR 20070025453
(71) Applicant: Samsung Electronics Co., Ltd., Suwon-si, Gyeonggi-Do (KR)
(72) Inventor: Park, Sung-Jin, Suwon-si Gyeonggi-do (KR); Oh, Hyun-Seok, Suwon-si Gyeonggi-do (KR); Roh, Hee-Jin, Suwon-si Gyeonggi-do (KR)
(74) Representative: Lang, Johannes

(57) **Abstract**

An apparatus and method for decoding data in a digital broadcasting receiver are disclosed, in which first payload data obtained by RS decoding of input RS packet data is buffered in a first buffer, packet data failed in the RS decoding is buffered in a second buffer, an erasure RS decoding is perfonned on the first payload data using erasure infonnation indicating whether the first payload data has errors and if the first payload data has errors, indicating the positions of the errors, payload data failed in the erasure RS decoding is overwritten on payloads of the packet data buffered in the second buffer, second payload data obtained by RS decoding of the overwritten packet data is overwritten in the first buffer, an erasure RS decoding is performed on the second payload data buffered in the first buffer, and the RS decoding and erasure RS decoding are repeated until errors of the second payload data are corrected.

## Description

### BACKGROUND OF THE INVENTION

### 1. Field of the Invention

The present invention generally relates to a method for receiving Transport Stream (TS) packets in a digital broadcasting system. More particularly, the present invention relates to a method and apparatus for decoding data in a receiver of a Digital Video Broadcasting-Handheld (DVB-H) system.

### 2. Description of the Related Art

Owing to the development of audio and video data compression technology and communication technology, digital broadcasting is realized by providing high-quality audio and video services to fixed or mobile terminals. The digital broadcasting includes Digital Audio Broadcasting (DAB), the digital audio radio broadcasting system, and Digital Multimedia Broadcasting (DMB) capable of providing audio, video and data services. An European digital audio broadcasting system, European Research Coordination Agency project1-47 (Eureka-147), and DVB-H developed from one of digital broadcasting standards, DVB-Terrestrial (DVB-T), by enforcing mobility and portability have recently attracted attention.

The DVB-H physical layer mostly follows the specification of the DVB-T system. To ensure stable data reception where a receiver is moving, the DVB-H physical layer supports an additional error correction coding technology such as Multi-Protocol Encapsulation-Forward Error Correction (MPE-FEC).

In order to improve the channel decoding performance of the fixed broadcasting reception technology, DVB-T, the European mobile broadcasting system DVB-H, adopts MPE-FEC.

MPE-FEC is designed so as to achieve a further channel coding gain by configuring a burst with IP datagrams and adding (255, 191) Reed-Solomon (RS) coding to each row of the burst.

In the DVB-H using MPE-FEC, broadcasting data is formed with IP datagrams, with at least one IP datagram forming a burst. The bursts are encoded by (255, 191) RS coding. Section data is divided into an MPE section carrying an IP datagram and an MPE-FEC section carrying parity data resulting from the RS coding. For notational simplicity, the term "section" herein covers both MPE section and MPE-FEC section.

The section data is transmitted in the payload of a TS packet that is a DVB-H transmission unit at the physical layer. The TS packet has a fixed length, 188 bytes for example, and is encoded first by (204, 188) RS coding and then by convolutional coding. One section is delivered in one or more TS packets.

An operation of a receiver for detecting section data for RS decoding and decoding the section data in a conventional DVB-H system that transmits TS packets will be described below.

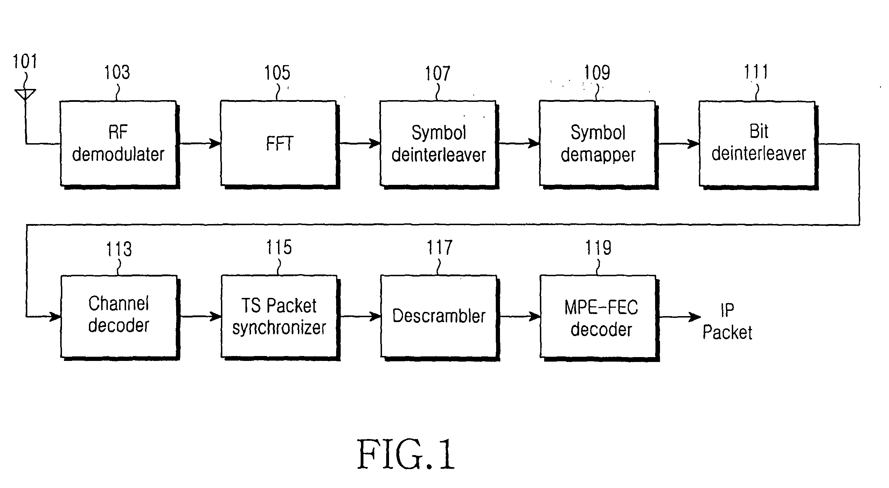

FIG. 1 is a block diagram of a receiver in a conventional digital broadcasting system using a TS packet as a transmission unit.

Referring to FIG. 1, a Radio Frequency (RF) demodulator 103 downconverts and demodulates a TS packet received through an antenna 101 over a wireless network, thus outputting a digital signal that is Orthogonal Frequency Division Multiplexing (OFDM) symbols. A Fast Fourier Transform (FFT) processor 105 converts the time-domain OFDM symbols to a frequency signal. A symbol deinterleaver 107 deinterleaves the frequency signal on a symbol basis and a symbol demapper 109 demaps the deinterleaved symbols in a predetermined modulation scheme such as Quadrature Phase Shift Keying (QPSK), 16-ary Quadrature Amplitude Modulation (QAM), or 64-ary QAM. A bit deinterleaver 111 deinterleaves the demapped symbols on a bit basis.

A channel decoder 113 includes a Viterbi decoder (not shown) and a (204, 188) RS decoder, for channel decoding and (204, 188) RS decoding. A TS packet synchronizer 115 synchronizes the TS packets and a descrambler 117 descrambles the TS packets. An MPE-FEC decoder 119 subjects the descrambled signal to Packet IDentifier (PID) filtering, detects sections from the filtered TS packets by analyzing their header information, buffers the sections, and decodes the sections by MPE-FEC decoding and RS decoding, thereby recovering the original broadcasting data.

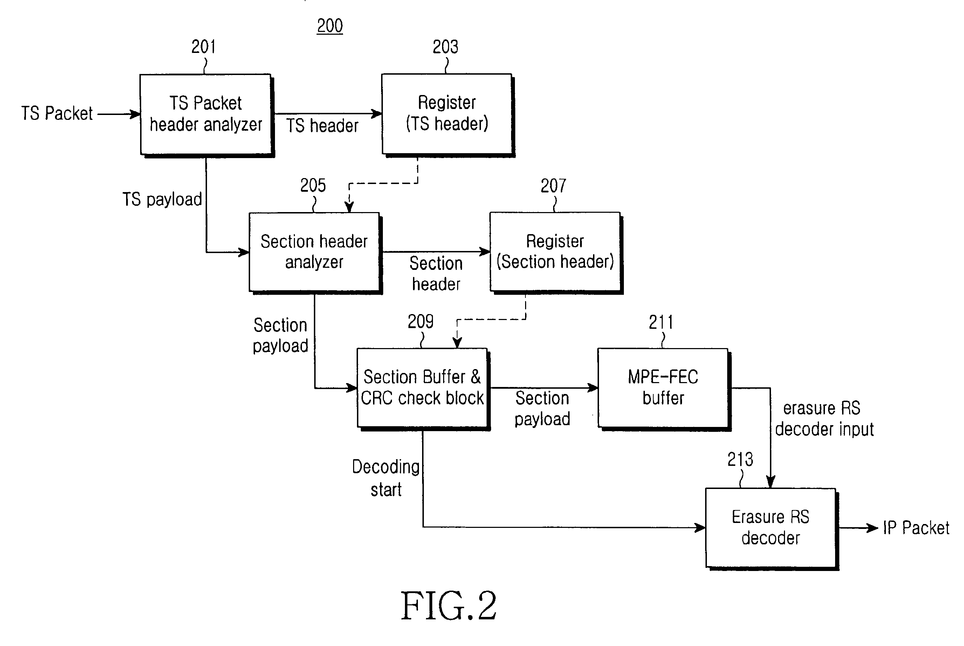

With reference to FIG. 2, a section detection and buffering operation during the conventional MPE-FEC decoding will be described.

Conventionally, a section is detected by a Cyclic Redundancy Check (CRC) result. Up to the descrambler 117 illustrated in FIG. 1, 188-bytes TS packets are transferred. A TS packet includes section start information and a PID. The PID identifies service program information. One section has a header, data, and a CRC. As the header of the section starts variably in the TS packet, the header of the TS packet has information indicating the start of the section header. It also indicates whether the TS packet includes a section header or data.

FIG. 2 is a block diagram of a conventional section detection and buffering apparatus in the receiver illustrated in FIG. 1. Section detection is defined as the process of extracting sections from the TS packets.

Referring to FIG. 2, for section detection, a TS packet header analyzer 201 extracts a header from a TS packet (referred to as a TS header) and provides the TS header to a first register 203 and the payload of the TS packet (referred to as TS payload) including data to a section header analyzer 205. While not shown, an RS decoder is positioned at the front end of the TS packet header analyzer and receives a 204-byte RS packet from the descrambler 117.

A section header analyzer 205 distinguishes a section header from a section payload in the TS payload based on the TS header received from the first register 203. If the TS payload includes the section header, the section header analyzer 205 extracts and provides the section header to a second register 207, and if the TS payload carries section data, it provides the section payload to a section buffer and CRC checker 209.

The section buffer and CRC checker 209 buffers the section payload and performs a CRC check on the section payload to test whether the section data is valid. The section buffer and CRC checker 209 provides the section data that has passed the validity test and its CRC check result indicating the presence or absence of errors to an MPE-FEC buffer 211. Also, the section buffer and CRC checker 209 receives section size information from the second register 207 and outputs a decoding start signal to an erasure RS decoder 213. The erasure RS decoder 213 decodes the section data by RS decoding based on the CRC check result received from the MPE-FEC buffer 211, thereby recovering original broadcasting data. In the above operation, the section buffer and CRC checker 209 detennines whether to buffer the section data in the MPE-FEC buffer 211 based on the CRC check result.

In general, when much valid data exists or erasure information indicating the positions of errors is known, MPE-FEC erasure RS decoding using the erasure information increases the success rate of RS decoding of section data. The CRC check result is provided from the MPE-FEC buffer 211 to the erasure RS decoder 213, and the erasure information indicates the positions of errors in the section data. As described above, knowledge of the positions of errors just doubles the error correction capability.

In real section detection and buffering, however, one section may be carried in a plurality of TS packets. Thus, even though only one of the TS packets may have errors, the entire section isinvalid in a CRC check result. As a result, the other valid TS packet(s) containing no errors are also discarded, making the conventional section detection and buffering scheme inefficient. For a long section, the presence of an error in a single TS packet leads to invalidation of all other valid TS packets. Therefore, the error correction capability of the MPE-FEC decoding is decreased.

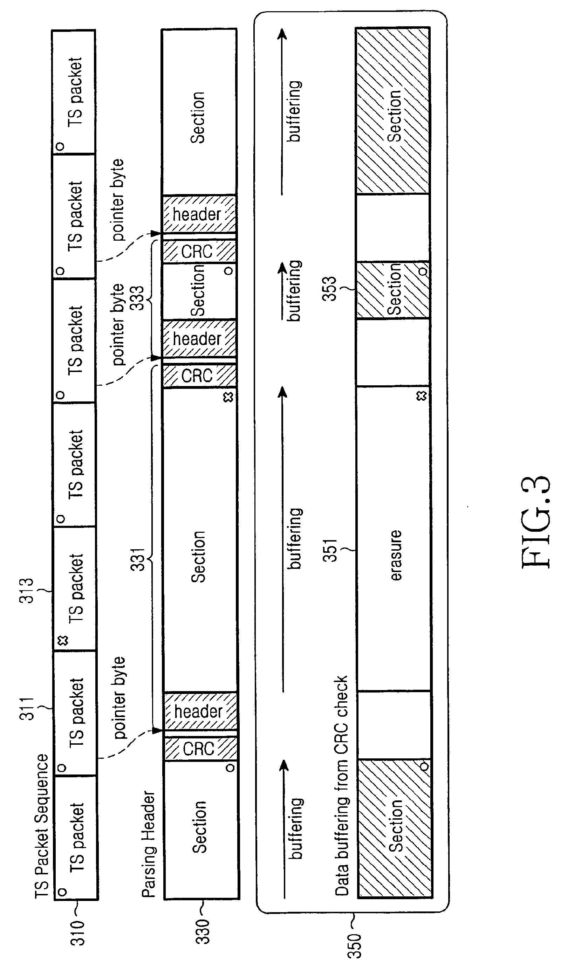

FIG. 3 illustrates a conventional operation for detecting sections with a failed TS packet and buffering sections.

Referring to FIG. 3, reference numeral 310 denotes a sequence of received TS packets and reference numeral 330 denotes a reconstructed version of the TS packet sequence 310 in terms of sections. Reference numeral 350 denotes buffering sections which have failed in the MPE-FEC buffer 211 of FIG. 2 as invalid. The TS packets marked with "O" at the left top are valid TS packets 311 and the TS packets marked with "X" at the left top are failed TS packets 313 in the TS packet sequence 310. If the failed TS packets 313 are included in the reconstructed section-based TS packets, the section buffer and CRC checker 209 treats the entire section data like the section data 351 as failed. Thus, the section buffer buffers only valid section data like the reconstructed section data 353.

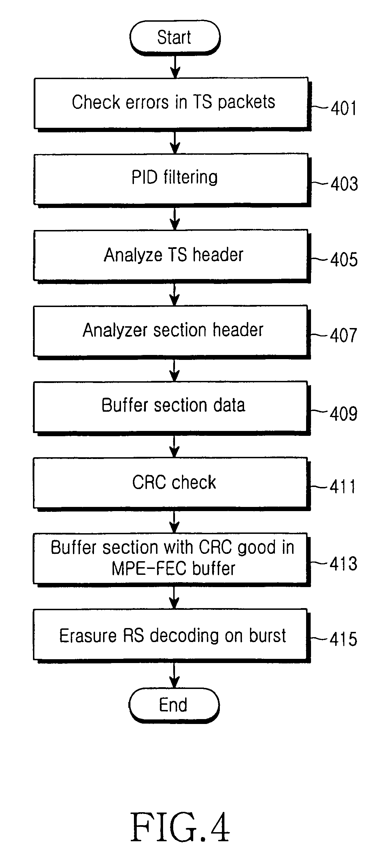

FIG. 4 is a flowchart illustrating the conventional section detection and buffering method in the receiver.

Referring to FIG. 4, the receiver checks errors in the TS packets in step 401 and detects the TS packets of an intended program by PID filtering in step 403. In step 405, the receiver detects the header start of section data by analyzing the header of a TS packet. The receiver analyzes the section header in step 407 and buffers the section data in the section buffer in step 409. After a CRC check of the buffered section in step 411, the receiver buffers the section data in the MPE-FEC buffer 211 if the CRC check result is positive and processes the section data as valid in step 413. If the CRC check result is negative, the receiver processes the section data as invalid in step 413. When the receiver has received one entire burst, it performs MPE-FEC RS decoding on the burst, thereby correcting errors in step 415.

In the above conventional section detection and decoding method, as described with reference to FIG. 3, if any of two or more TS packets carrying one section that has errors, the entire section data is processed as invalid. Therefore, the MPE-FEC decoding is inefficient.

### SUMMARY OF THE INVENTION

An aspect of exemplary embodiments of the present invention is to address at least the problems and/or disadvantages described above and to provide at least the advantages described below. Accordingly, an aspect of exemplary embodiments of the present invention is to provide an apparatus and method for increasing the decoding performance of received data in a digital broadcasting system.

Another aspect of exemplary embodiments of the present invention is to provide a method and apparatus for increasing MPE-FEC decoding performance in a digital broadcasting receiver.

In accordance with an aspect of exemplary embodiments of the present invention, there is provided a method for decoding data in a digital broadcasting receiver, in which first payload data obtained by RS decoding of input RS packet data is buffered in a first buffer, packet data failed in the RS decoding is buffered in a second buffer, an erasure RS decoding is performed on the first payload data using erasure information indicating whether the first payload data has errors and if the first payload data has errors, indicating the positions of the errors, payload data failed in the erasure RS decoding is overwritten on payloads of the packet data buffered in the second buffer, second payload data obtained by RS decoding of the overwritten packet data is overwritten in the first buffer, an erasure RS decoding is performed on the second payload data buffered in the first buffer, and the RS decoding and erasure RS decoding are repeated until errors of the second payload data are corrected.

In accordance with another aspect of exemplary embodiments of the present invention, there is provided an apparatus for decoding data in a digital broadcasting receiver, in which an RS decoder performs an RS decoding on input RS packet data or packet data failed in a previous decoding, a first buffer buffers payload data obtained by RS decoding of the RS decoder, a second buffer buffers packet data failed in RS decoding of the RS decoder, an erasure RS decoder performs an erasure RS decoding on the payload data buffered in the first buffer using erasure information indicating whether the payload data has errors and if the payload data has errors, indicating the positions of the errors, and a buffer controller accesses addresses at which the packet data buffered in the second buffer would have been buffered in the first buffer, if the packet data were successful in RS decoding, after the erasure RS decoding, overwrites payload data failed in the erasure RS decoding at the buffering addresses in the second buffer, and provides the packet data buffered in the second buffer to the RS decoder until errors of the payload data are corrected.

### BRIEF DESCRIPTION OF THE DRAWINGS

The above and other objects, features and advantages of certain exemplary embodiments of the present invention will be more apparent from the following detailed description taken in conjunction with the accompanying drawings, in which:
- FIG. 1: is a block diagram of a receiver in a conventional digital broadcasting system using a TS packet as a transmission unit;
- FIG. 2: is a block diagram of a conventional section detection and buffering apparatus in the receiver illustrated in FIG. 1;
- FIG. 3: illustrates a conventional operation for detecting sections with a failed TS packet and buffering sections;
- FIG. 4: is a flowchart illustrating a conventional section detection and buffering method in the receiver;
- FIG. 5: is a block diagram of a section detection and buffering apparatus in a digital broadcasting system according to an exemplary embodiment of the present invention;
- FIG. 6: illustrates an operation for detecting sections including a failed TS packet and buffering sections according to the exemplary embodiment of the present invention;
- FIG. 7: is a flowchart illustrating a section detection and buffering method according to the exemplary embodiment of the present invention;
- FIG. 8: illustrates a TS header structure in a typical DVB-H system;
- FIG. 9: is a block diagram of an MPE-FEC decoder according to another exemplary embodiment of the present invention;
- FIG. 10: is a flowchart illustrating an operation of the MPE-FEC decoder according to the second exemplary embodiment of the present invention;
- FIG. 11: illustrates buffering of section payloads on a TS packet basis in an MPE-FEC buffer according to the second exemplary embodiment of the present invention;
- FIG. 12: illustrates buffering of RS packets that have turned out failed during RS decoding in a failed RS packet buffer on a 204 byte basis according to the second exemplary embodiment of the present invention;
- FIG. 13: illustrates row-by-row erasure RS decoding in a (255, 191) erasure RS decoder, when all section data is received and thus a burst ends according to the second exemplary embodiment of the present invention;
- FIG. 14: illustrates updating the section payloads of RS packet data buffered in the failed RS packet buffer, as a result of row-by-row erasure RS decoding of an MPE-FEC buffer by the erasure RS decoder illustrated in FIG. 13 according to the second exemplary embodiment of the present invention;
- FIG. 15: illustrates RS decoding of reconstructed RS packets illustrated in FIG. 14 by an RS decoder according to the second exemplary embodiment of the present invention;
- FIG. 16: illustrates overwriting data for which an iterative RS decoding is successful after the erasure RS decoding illustrated in FIG. 15 at a predetermined position of the MPE-FEC buffer by an RS packet buffer controller according to the second exemplary embodiment of the present invention;
- FIG. 17: illustrates successful correction of errors in rows detected during a first RS decoding illustrated in FIG. 11 by iterative decoding of the erasure RS decoder according to the second exemplary embodiment of the present invention; and
- FIG. 18: illustrates the structure of an RS packet input to an RS decoder in a DVB-H system to which the present invention is applied.

Throughout the drawings, the same drawing reference numerals will be understood to refer to the same elements, features and structures.

### DETAILED DESCRIPTION OF EXEMPLARY EMBODIMENTS

The matters defined in the description such as a detailed construction and elements are provided to assist a comprehensive understanding of exemplary embodiments of the invention. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

### Embodiment 1

The basic concept of a first exemplary embodiment of the present invention is that the performance of MPE-FEC decoding is improved using the error detection flag of a TS packet. Compared to the conventional section detection and buffering method that decides as to whether to buffer section data according to its CRC check result during decoding, a section detection and buffering method according to the first exemplary embodiment of the present invention determines whether to buffer section data carried in a TS packet according to the error detection flag of the TS packet, i.e. the RS decoding result of the TS packet in a channel decoder, and the continuity counter of the TS packet. The channel decoder is positioned at the front end of a section detection, buffering, and RS decoding block in a DVB-H receiver and includes a Viterbi decoder and an RS decoder, for example, a (204, 188) RS decoder.

In accordance with the first exemplary embodiment of the present invention, one bit indicating the result of RS decoding in the channel decoder is set as an error detection flag for a TS packet. The error detection flag is included in the header of the TS packet output from the channel decoder, for use in MPE-FEC buffering and thus MPE-FEC decoding. That is, the error detection flag is used in TS packet-based section detection and buffering for MPE-FEC decoding.

A simulation of the first exemplary embodiment of the present invention revealed that (204, 188) RS decoding in the channel decoder is highly accurate with a very low decoding error rate of 10⁻⁶. When section data is buffered on a TS packet basis, the number of failed TS packets should be determined. This determination can be made using continuity counters included in the headers of the TS packets. Accordingly, the section data detection method of the present invention prevents loss of valid section data, thereby improving MPE-FEC decoding performance.

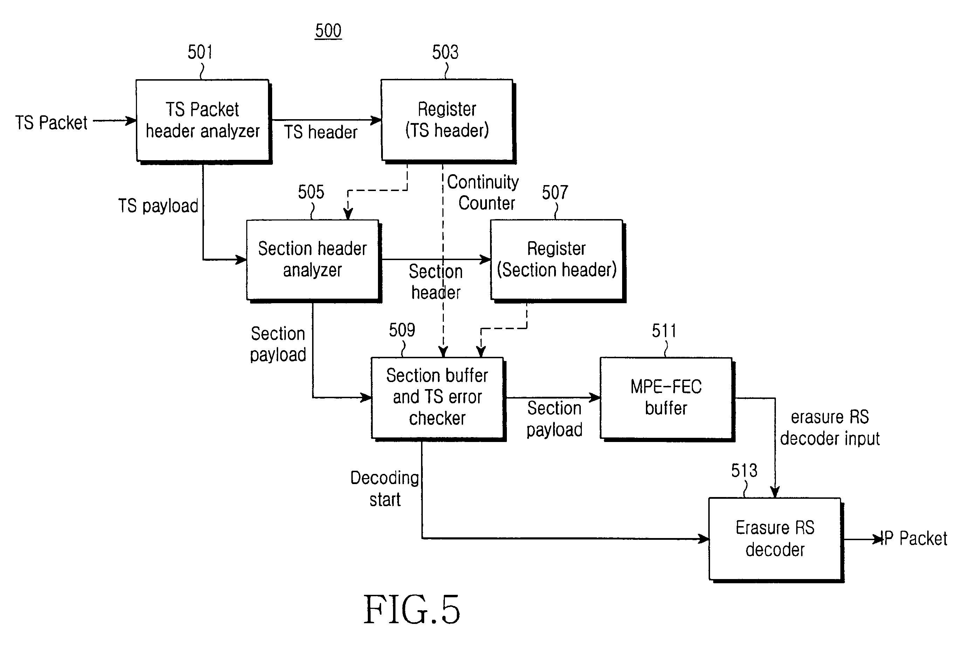

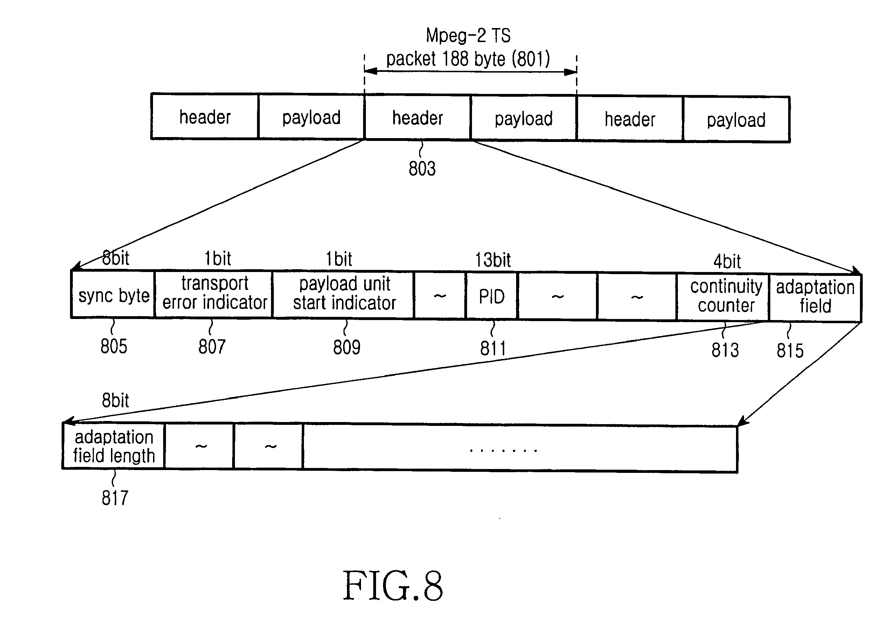

A description will be made of the structure of a TS header including an error detection flag and a continuity counter with reference to Table 1 and FIG. 8, followed by a detailed description of the first exemplary embodiment of the present invention with reference to FIGs. 5, 6 and 7.

**Table 1**

| Field name | Length | Usage |
|---|---|---|
| sync byte | 8 bits | It is used to distinguish between TS packets or to synchronize on a packet stream basis. 0x47 or 0xB8 in DVB-H. |
| transport error indicator | 1 bit | The RS decoder changes this value after RS decoding. It is the error detection flag, which is set to 1 if error is not corrected. (i.e. 0: error free, 1: error existing) |
| payload unit start indicator | 1 bit | It indicates whether a TS packet includes a section header. In the presence of a section header, information indicating a header start, i.e. a pointer byte is read from a second layer of the TS packet and the section header is analyzed. |
| PID | 13 bits | A packet ID identifying the program of a TS packet. Since the same section is carried with the same PID, unnecessary packets are filtered away by PID filtering and packets with the same PID are used. |
| continuity counter | 4 bits | To determine whether a TS packet has been lost during TS packet stream transmission, this field provides cyclic sequence information. TS packets are cyclically numbered in 4 bits, for example, with 0, 1,2,..., 15, 0, 1 ... |
| adaptation field length | 8 bits | A pointer indicating the position of a section header in a TS packet (also called the pointer byte in the above) |

FIG. 8 illustrates a TS header structure in a typical DVB-H system.

Referring to FIG. 8, the header 803 of a TS packet 801 includes a sync byte 805 (referred to as sync information field) for synchronization, a transport error indicator 807 that is an error detection flag, a payload unit start indicator 809 indicating whether a TS packet includes a section header, a PID 811 that identifies a program to which the TS packet belongs, a continuity counter 813 that is the sequence number of the TS packet that is cyclic from 0 to 15, for example, in a TS packet stream, and an adaptation 815 including a pointer byte indicating the position of the section header. The pointer byte is included in an adaptation field length 817 of the adaptation 815.

A receiver that receives the TS packets of the above header structure according to the present invention has the configuration illustrated in FIG. 1, other than that a section data detection and buffering apparatus 500 is provided in the MPE-FEC decoder 119 according to the first exemplary embodiment of the present invention. Herein, a description of the same components as those illustrated in FIG. 1 is omitted, while the section data detection and buffering apparatus 500 is described below.

FIG. 5 is a block diagram of the section detection and buffering apparatus 500 for decoding in a receiver of a digital broadcasting system according to the exemplary embodiment of the present invention.

Referring to FIG. 5, a TS packet header analyzer 501 extracts a TS packet header and a TS payload from a TS packet, for section detection, and provides the TS header to a first register 503 and the TS payload to a section header analyzer 505. The section header analyzer 505 separates the TS payload into a section header and a section payload based on the TS header received from the first register 203. If the TS payload includes the section header, the section header analyzer 505 extracts the section header and provides the section header to a second register 507. If the TS payload includes the section data, the section header analyzer 505 provides the section payload to a section buffer and TS error checker 509. The section buffer and TS error checker 509 buffers the section data on a TS packet basis. The first register 503 provides error detection flags and continuity counters included in TS headers to the section buffer and TS error checker 509. According to the present invention, the section buffer and TS error checker 509 determines whether the TS packets have errors using the error detection flags and counts the number of failed TS packets in a received TS packet stream using the continuity counters. Then, the section buffer and TS error checker 509 calculates buffering addresses for the remaining valid TS packets.

The section buffer and TS error checker 509 receives section size information from the second register 507, outputs a decoding start signal to an erasure RS decoder 513, and provides section data that has passed the error check and erasure information indicating the presence or absence of errors and the position of detected errors to an MPE-FEC buffer 511. The section data is buffered in the MPE-FEC buffer 511 on a TS packet basis. The erasure RS decoder 513 performs erasure RS decoding on the section data based on the erasure information received from the MPE-FEC buffer 511, thereby recovering original broadcasting data.

As described above, the section buffer and TS error checker 509 determines whether a TS packet has errors based on the error detection flag and the continuity counter of the TS packet and calculates buffering addresses for valid TS packets, compared to the conventional technology in which a decision is made as to whether to buffer a TS packet in the MPE-FEC buffer 211 based on the CRC check result of buffered section data of the TS packet. Since a greater amount of section data is buffered in the present invention, MPE-FEC RS decoding is accurate, resulting in improved performance of the MPE-FEC decoding.

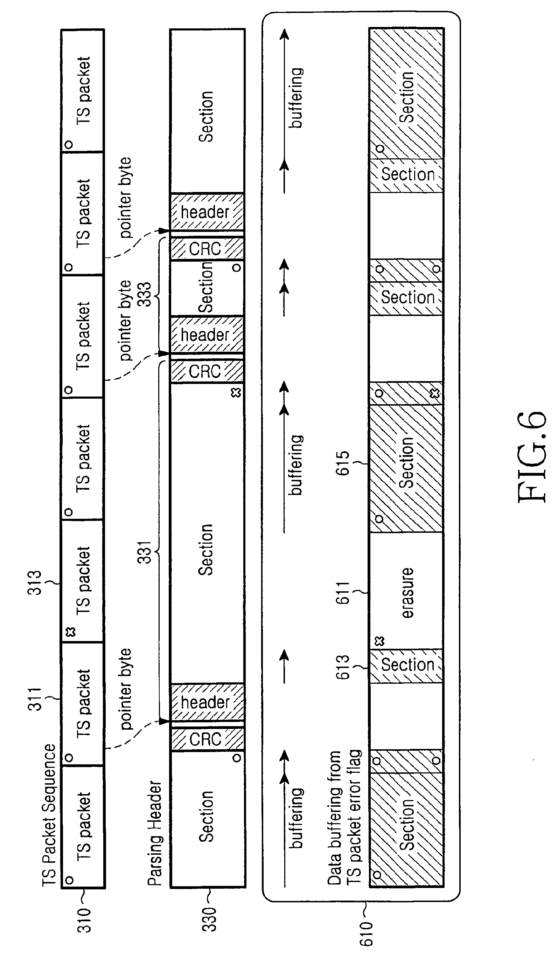

FIG. 6 illustrates an operation for detecting sections having failed TS packets and buffering sections according to the exemplary embodiment of the present invention. The same components as those illustrated in FIG. 3 are labeled with like reference numerals and their description is not provided herein.

Referring to FIG. 6, reference numeral 610 denotes buffering of section data using erasure information according to the present invention. The TS packets marked with "O" at the left top are valid TS packets 311 and the TS packets marked with "X" at the left top are failed TS packets 313 in a TS packet sequence 310. If the failed TS packets 313 are included in reconstructed TS packet-based section data, the section buffer and TS error checker 509 processes only the data of a failed TS packet as failed as indicated by reference numeral 611 and buffers valid TS packets as indicated by reference numerals 613 and 615 under the same section. Since only the payloads of failed TS packets are processed as failed, the entire section is decoded with an improved performance.

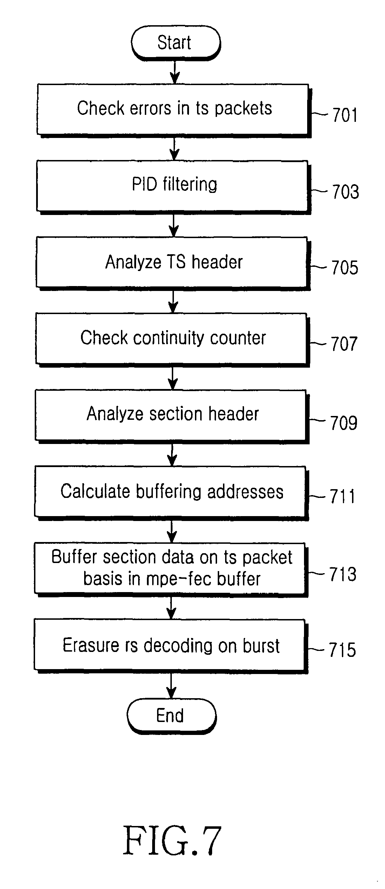

FIG. 7 is a flowchart illustrating a section detection and buffering method according to the exemplary embodiment of the present invention.

Referring to FIG. 7, the receiver determines whether the TS packets have errors by checking their error detection flags in their TS headers, as described above in Table 1, in step 701 and detects the TS packets of an intended program by PID filtering in step 703.

In step 705, the receiver detects the header start of section data by analyzing the header of each TS packet. The receiver counts the number of the failed TS packets in a TS packet stream based on the continuity counter (described in Table 1) of the header of at least one TS packet that belongs to the same section in step 707. The receiver analyzes the section header and the number of the failed TS packets in step 709 and calculates buffering addresses for the remaining valid TS packets in step 711. In step 713, the receiver buffers the valid section data on a TS packet basis at the buffering addresses. After buffering section data of one burst, the receiver performs erasure RS decoding on the burst, thereby recovering original broadcasting data in step 715.

In this manner, section data is buffered on a TS packet basis and only the data of failed TS packets are processed as erasures during erasure RS decoding. Therefore, MPE-FEC decoding performance is improved.

A second exemplary embodiment of the present invention is proposed to further improve the MPE-FEC decoding performance by modifying the decoding block structure such that iterative decoding is performed in the erasure RS decoder 513 and the (204, 188) RS decoder (not shown) on which the MPE-FEC decoding performance depends dominantly. Thus, the (204, 188) RS decoder and the (255, 191) erasure RS decoder correct errors in cooperation with each other.

### Embodiment 2

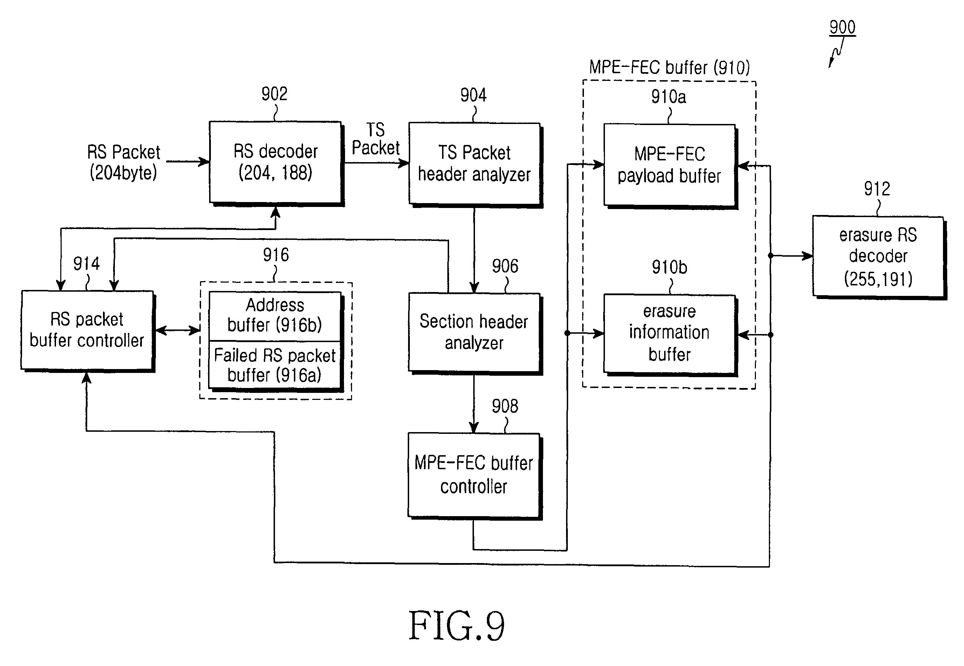

FIG. 9 is a block diagram of an MPE-FEC decoder 900 according to another exemplary embodiment of the present invention.

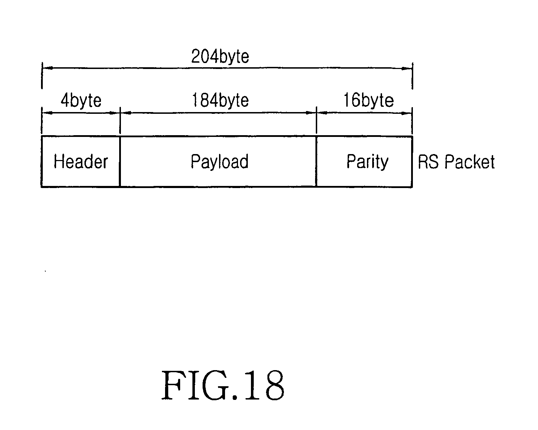

Referring to FIG. 9, an RS decoder 902 determines whether a 204-byte received RS packet has errors by RS decoding of the RS packet. A TS header analyzer 904 considers an RS packet that turns out valid as a result of RS decoding to be a TS packet and extracts and analyzes the header of the TS packet. The 204-byte RS packet input to the RS decoder 902 is shown in FIG. 18.

The RS decoder 902 differs from an erasure RS decoder 912 in that the former performs RS decoding on input 204-byte RS packets and the latter performs RS decoding on 255-byte packets using erasure information.

For a 204-byte RS packet that failed as a result of RS decoding in the RS decoder 902, an RS packet buffer controller 914 buffers the failed RS packet in a failed RS packet buffer 916a of an RS packet buffer 916. Simultaneously, in an address buffer 916b, the RS packet buffer controller 914 buffers an address at which the RS packet might have been stored in an MPE-FEC payload buffer 910a if the decoding of the RS packet were successful. This address is referred to as the buffering address of the failed RS packet. When the erasure RS decoder 912 performs erasure RS decoding on 184-byte sections buffered in the MPE-FEC payload buffer 910a, the RS packet buffer controller 914 reads a 184-byte payload whose error is not corrected by the erasure RS decoding and overwrites it on the 184-byte payload of a 204-byte RS packet including a 4-byte header and 16-byte parity information buffered in the failed RS packet buffer 916a.

The RS packet buffer controller 914 controls access to the RS packet buffer 916 and also controls data reading and writing of the RS packet buffer 916. For a failed RS packet, the RS packet buffer controller 914 buffers a buffering address of the failed RS packet in the address buffer 916b. The buffering address of the failed RS packet is received from a section header analyzer 906.

Since the section header analyzer 906 knows the buffering addresses of the TS packets whose decoding is successful in the RS decoder 902, it determines that addresses at which the successful TS packets are not buffered are buffering addresses of failed RS packets. That is, the buffering addresses of the failed RS packets are known from those of the successful TS packets.

The section header analyzer 906 extracts a section header and a section payload from a TS payload based on a TS header extracted by the TS packet header analyzer 904 and calculates a buffering address at which the extracted section payload will be buffered in the MPE-FEC payload buffer 910a using the section header and the section payload. An MPE-FEC buffer controller 908 buffers RS-decoded and extracted payloads in the MPE-FEC payload buffer 910a at buffering addresses calculated by the section header analyzer 906 until a burst ends. Also, the MPE-FEC payload buffer controller 908 buffers erasure information indicating RS decoding results of the RS decoder 902 and the positions of errors in an erasure information buffer 910b.

The MPE-FEC buffer controller 908 buffers section payloads extracted by the section header analyzer 906 in the MPE-FEC payload buffer 910a of an MPE-FEC buffer 910, and erasure information resulting from RS decoding of input RS packets in the erasure information buffer 910b. An RS decoding result indicating the presence or absence of errors (hereinafter, referred to as error detection information) output from the RS decoder 902 is 1 bit set to "0" or "1". For example, if a 204-byte RS packet is successful during RS decoding, the RS decoder 902 outputs "0" per byte to the TS packet header analyzer 904 and if the RS packet is failed, the RS decoder 902 outputs "1" per byte to the TS packet header analyzer 904. The TS packet header analyzer 904 outputs the 1-bit error detection information to the section header analyzer 906.

When a section formed by the TS packet header analyzer 904 is buffered in the MPE-FEC payload buffer 910a in 184 bytes, the 1-bit error detection information from the RS decoder 902 should indicate the presence or absence of an error per byte. Therefore, after the RS decoding, the 1-bit error detection information output from the RS decoder 902 is copied to 184 bits. The 184-bit erasure information that is the copies of the 1-bit error detection information is buffered in the erasure information buffer 910b because the erasure information buffer 910b buffers error detection information that is 1 bit per 1 byte of a section buffered in the MPE-FEC payload buffer 910a. The 184 bits indicating the presence or absence or errors for a 184-byt payload is defined as "erasure information". The receiver determines the position of data having errors in the MPE-FEC payload buffer 910a using the erasure information.

RS-decoded section payloads and 184-bit erasure information are buffered in the MPE-FEC buffer 910 until the section header analyzer 906 detects the end of the burst. When the burst ends, the erasure RS decoder 912 performs erasure RS decoding on all payloads buffered in the MPE-FEC buffer 910 using the erasure information, row by row, to thereby correct errors again.

The erasure RS decoder 912 stores the decoding results of the row-by-row decoding in the MPE-FEC buffer 910. If the erasure RS decoding is successful for all rows, the decoded IP packets are transmitted to an upper layer (not shown).

On the other hand, if any of the rows fails during the erasure RS decoding, the RS packet buffer controller 914 reads payloads from the buffering address of RS packets failed during the previous RS decoding and updates the payloads of the failed RS packets buffered in the failed RS packet buffer 916a with the read payloads. This updating further corrects errors, compared to the previous RS decoding.

The erasure RS decoding added to the RS decoding corrects errors in the payload of packets, even though partially. The data of 204-byte RS packets whose errors are corrected by the erasure RS decoding even though partially are decoded again by the RS decoder 902. After the RS decoding, the 184-byte payloads of successful RS packets are buffered again in the MPE-FEC payload buffer 910a. At the same time, in the address buffer 916b, the RS packet buffer controller 914 buffers buffering addresses of RS packets failed during the RS decoding in the MPE-FEC payload buffer 910a, i.e. addresses at which the failed RS packets would be stored in the MPE-FEC payload buffer 910a, if they were successfully RS-decoded.

The RS packet buffer controller 914 buffers in the address buffer 916b addresses at which RS packets failed during RS decoding of the RS decoder 902 would be stored in the MPE-FEC buffer 910, if they were successful in the RS decoding, and buffers the failed RS packets in the failed RS packet buffer 916a. The RS packet buffer controller 914 reads data whose errors are not corrected by the erasure RS decoder 912 from the MPE-FEC buffer 910 and overwrites the data on payload buffered in the failed RS packet buffer 916. After the overwriting, the RS packet buffer controller 914 commands the RS decoder 902 to perform an iterative decoding. Thus, the RS decoder 902 performs RS decoding on the data buffered in the failed RS packet buffer 916a column by column. Then, the RS packet buffer controller 914 overwrites the payloads of packets whose errors are corrected by the iterative RS decoding in the MPE-FEC payload buffer 910a.

When the RS packet buffer controller 914 overwrites the data iteratively decoded by the RS decoder 902 in the MPE-FEC buffer 910, the erasure RS decoder 912 again performs erasure RS decoding on the data buffered in the MPE-FEC payload buffer 910a. If the erasure RS decoding results in perfect error correction, the error-corrected IP packets are output to the upper layer. If errors are still in the data, the RS decoding and the erasure RS decoding are repeated. After the RS decoder 902 performs an iterative decoding on the data buffered in the failed RS packet buffer 916a, the RS packet buffer controller 914 buffers error-corrected data in the MPE-FEC payload buffer 910a and overwrites erasure information resulting from the iterative RS decoding on the previous erasure information about the positions of errors in the error-corrected data in the erasure information buffer 910b.

If there is any data whose errors are corrected by the erasure RS decoder 912, the data is deleted from the failed RS packet buffer 916a.

When the MPE-FEC buffer controller 908 completes buffering in the MPE-FEC buffer 910, the RS packet buffer controller 914 can determine when the erasure RS decoder 912 and the RS decoder 902 have completed their decoding.

In the above-described operation, since RS-decoded data is error-corrected by erasure RS decoding and then by RS decoding, more reliable data can be achieved by decoding. That is, the erasure RS decoding added to the RS decoding increases the decoding performance of received data.

If an erroneous row still exists after RS decoding→erasure RS decoding→RS decoding→erasure RS decoding, the same operation is repeated. The effect of error-corrected data in the row and column directions brings better performance through iterative decodings, relative to a single decoding. Herein, the terms "packet" and "packet data" are interchangeably used and have the same meaning and "payload" and "payload data" are also interchangeably used and have the same meaning.

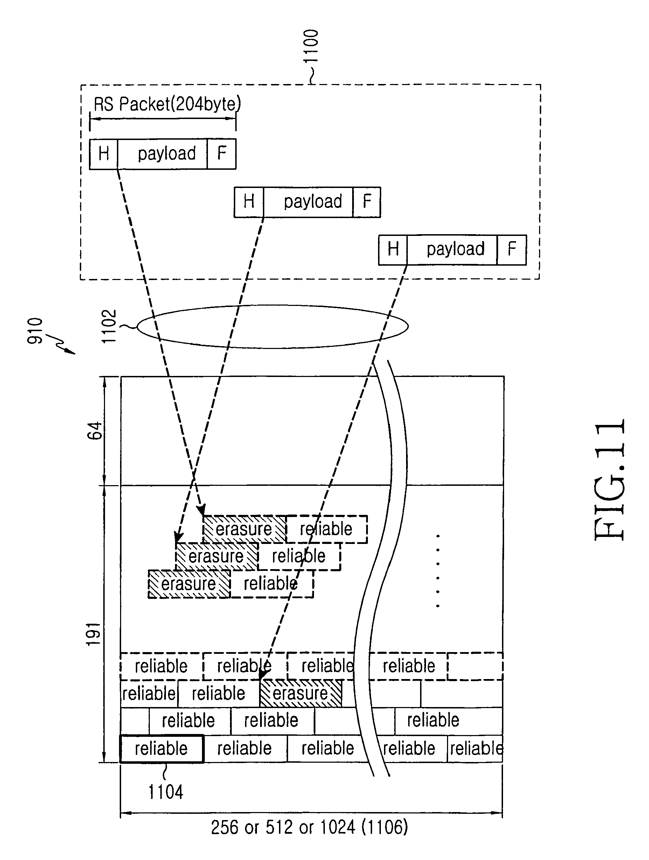

The decoding method of the RS decoder 902 and the erasure RS decoder 912 will be described later with reference to FIGs. 11 to 17.

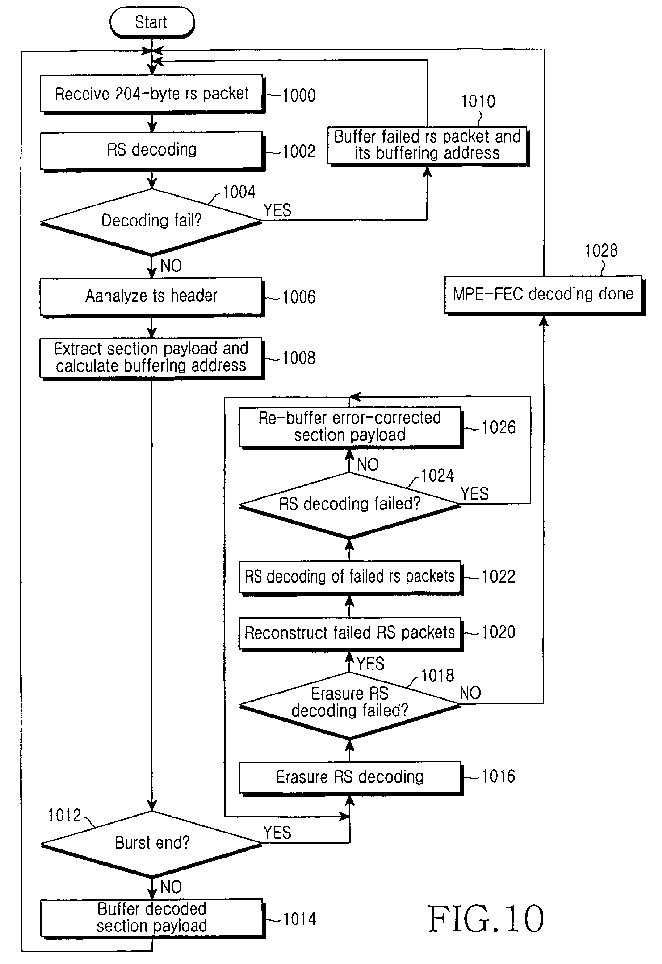

FIG. 10 is a flowchart illustrating an operation of the MPE-FEC decoder 900 according to the second exemplary embodiment of the present invention.

Referring to FIG. 10, the MPE-FEC decoder 900 receives a 204-byte RS packet in step 1000 and RS-decodes the RS packet in step 1002. If no errors have been found in the RS packet as a result of the RS decoding in step 1004, the MPE-FEC decoder 900 analyzes the header of the resulting TS packet in step 1006 and extracts a section payload using the TS header and calculates an address at which the section payload will be buffered in the MPE-FEC buffer based on the section payload and a section header in step 1008.

On the contrary, if the RS packet has failed in the RS decoding in step 1004, the MPE-FEC decoder 800 buffers the failed RS packet in the RS failed RS packet buffer 916a and calculates and stores an address at which the failed RS packet would be buffered in the MPE-FEC payload buffer 910a if it were successful (i.e. a buffering address of the failed RS packet) in step 1010.

In step 1012, the MPE-FEC decoder 900 monitors whether the burst has ended. If the burst still remains, the MPE-FEC decoder 900 buffers the section payload of the decoded TS packet in step 1014.

If the burst ends in step 1012, the MPE-FEC buffer 900 performs erasure RS decoding in step 1016. In step 1018, the MPE-FEC decoder 900 checks the result of the erasure RS decoding. If at least one row fails in the erasure RS decoding, the MPE-FEC decoder 900 overwrites the section data of the RS packets failed in the RS decoding previous to the erasure RS decoding on data resulting from the erasure RS decoding, thereby reconstructing the RS packets in step 1020.

The MPE-FEC decoder 900 performs RS decoding on the reconstructed RS packets in step 1022 and checks the result of the RS decoding in step 1024. If the RS decoding is successful, the MPE-FEC decoder 900 buffers error-corrected section payloads in the MPE-FEC buffer 910 in step 1026 and then returns to step 1016 in order to perform erasure RS decoding iteratively. On the contrary, if the RS decoding is failed in step 1024, the MPE-FEC decoder 900 proceeds to step 1016 without buffering the RS-decoded section payloads in the MPE-FEC buffer 910, in order to correct errors again. If the erasure RS decoding is successful in step 1018, the MPE-FEC decoder 900 ends the MPE-FEC decoding in step 1028.

The procedure illustrated in FIG. 10 is performed for each TS packet in a sequentially received TS packet stream.

FIG. 11 illustrates buffering of section payloads on a TS packet basis in the MPE-FEC buffer 910 according to the second exemplary embodiment of the present invention.

Referring to FIG. 11, the RS decoder 902 decodes an input having 204-byte RS packet. If the decoding is successful, only a payload other than a 4-byte header H and 16-Byte parity information F is buffered in the MPE-FEC buffer 910. Error erasure information about the payloads of the received RS packets is represented as reliable or erasure in the MPE-FEC buffer 910.

Herein, "reliable" indicates the absence of errors in data and "erasure" indicates the presence of errors in data.

That is, it is determined whether to process a 188-byte TS packet as reliable or erasure according to the decoding result of its RS packet and reliable/erasure is written at a buffer address corresponding to the TS packet in the MPE-FEC buffer 910. The right three blocks 110 are RS packets each having a 4-byte header H, a 184-byte section payload (whose error status is represented as reliable or erasure), and 16-byte _parity information F. For all section payloads, they are marked with reliable or erasure according to whether they has errors in the MPE-FEC buffer 910. In accordance with the second exemplary embodiment of the present invention, for payloads marked with "erasure", the payloads, their headers, and their parities (i.e. 204-byte failed RS packets) are buffered in the failed RS packet buffer 916a. As described with reference to FIGs. 9 and 10, the buffering addresses of the MPE-FEC buffer 910 for the payloads marked with "erasure" are also buffered in the address buffer 916b. Reference numeral 1102 denotes the buffering addresses at which the payloads of the failed RS packets would otherwise be buffered in the MPE-FEC buffer 910.

Rectangle 1104 denotes a decoded section payload and "reliable" and "erasure" indicate whether the corresponding RS packets are successful or failed in RS decoding and also indicate the buffering addresses of the valid or failed RS packets.

After the RS decoding, the erasure RS decoder 912 decodes the section payloads buffered in the MPE-FEC buffer 910 by rows using the erasure information, thereby correcting errors.

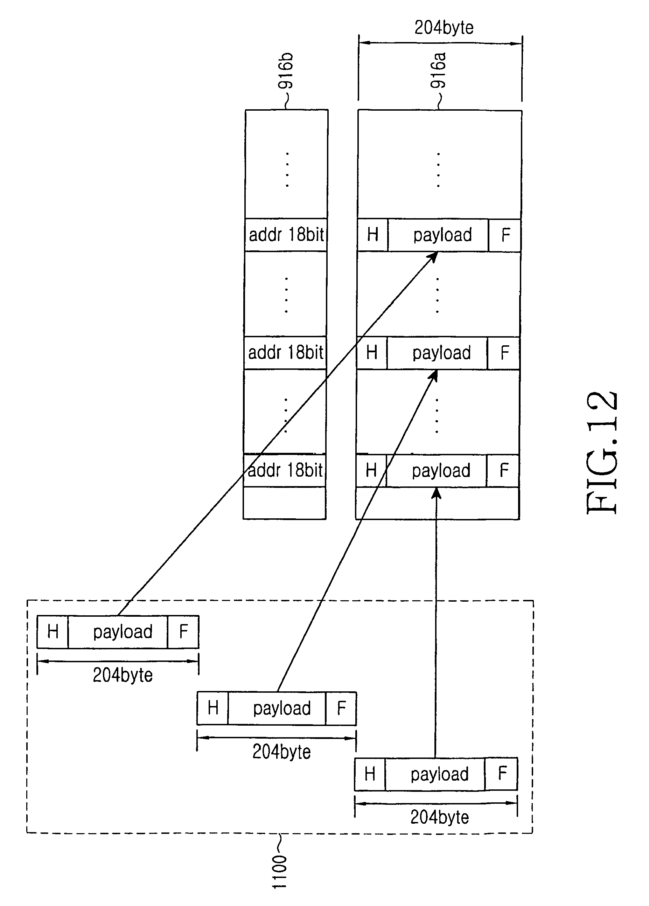

FIG. 12 illustrates buffering of the RS packets that have failed RS decoding in the RS decoder 902 in the failed RS packet buffer 916a on a 204-byte basis according to the second exemplary embodiment of the present invention.

Referring to FIG. 12, reference numeral 1100 denotes failed RS packets during RS decoding, as described with reference to FIG. 11. According to the second exemplary embodiment of the present invention, the failed RS packets are buffered in the failed RS packet buffer 916a. The addresses 1102 of FIG. 11 at which the failed RS packets 1100 would be buffered in the MPE-FEC buffer 910 if they were successful are buffered in the address buffer 916b. "addr 18bit" in the address buffer 916b of FIG. 12 indicates that the buffering addresses of the failed RS packets in the MPE-FEC buffer 910 have 18 bits.

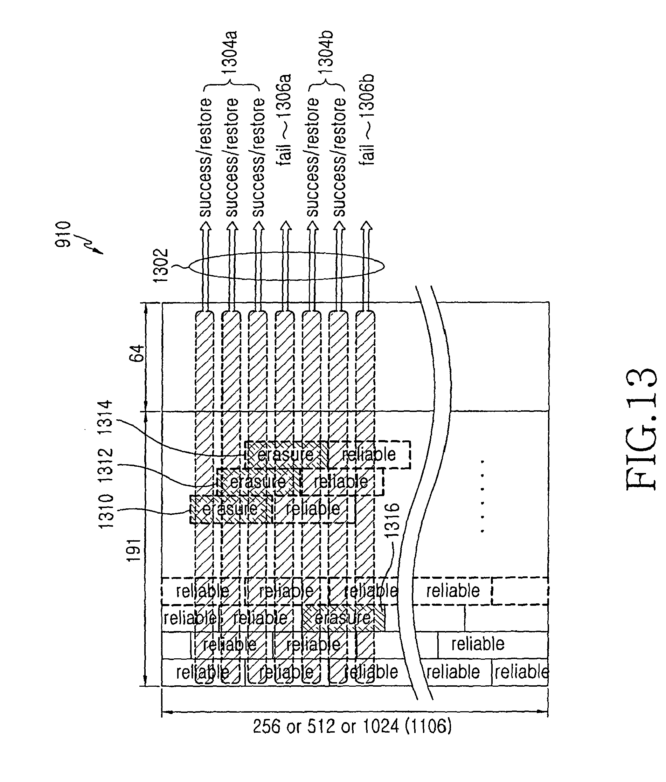

FIG. 13 illustrates row-by-row erasure RS decoding in the (255, 191) erasure RS decoder 912, when all section data is received and thus a burst ends according to the second exemplary embodiment of the present invention.

Referring to FIG. 13, the TS packets received at the digital broadcasting receiver are buffered in a burst of 256, 512 or 1024 bytes long and 255 bytes wide. Section payloads are buffered column by column, that is, from the left top to the left bottom in the MPE-FEC buffer 910. If the section payloads are all buffered in the columns, erasure RS decoding is performed. As is well known in the art, the erasure RS decoding is to decode the section data buffered in the MPE-FEC buffer row by row. The left region of the burst area, i.e. a 191-byte area, has information necessary for broadcasting and the right region, i.e. a 64-byte region, has parity information resulting from RS coding in a transmitter. The buffered data are read along the horizontal axis and decoded using erasure information.

That is, the TS packets marked with "reliable" are valid ones for which the error detection flags are set to "0" and the TS packets marked with "erasure" are failed ones for which the error detection flags are set to "1". Therefore, the erasure RS decoder 912 can correct the information marked with "erasure" using the erasure information.

Reference numeral 1302 denotes decoding of the data buffered in the MPE-FEC buffer 910 using the erasure information row by row by the erasure TS decoder 912.

Reference numerals 1310, 1312, 1314, and 1316 denote data which has failed in RS decoding and marked with "erasure". The erasure RS decoder 912 performs row-by-row erasure RS decoding on the data buffered in the MPE-FEC buffer 910 as indicated by reference numeral 1302. In the illustrated case of FIG. 13, it is assumed that each payload is positioned across three rows.

Reference numerals 1304a and 1304b denote successful erasure RS decoding results for corresponding rows after the erasure RS decoding 1302, and reference numerals 1306a and 136b denote failed erasure RS decoding for corresponding rows. The error-corrected payloads indicated by reference numerals 1304a and 1304b are buffered in the MPE-FEC buffer 910.

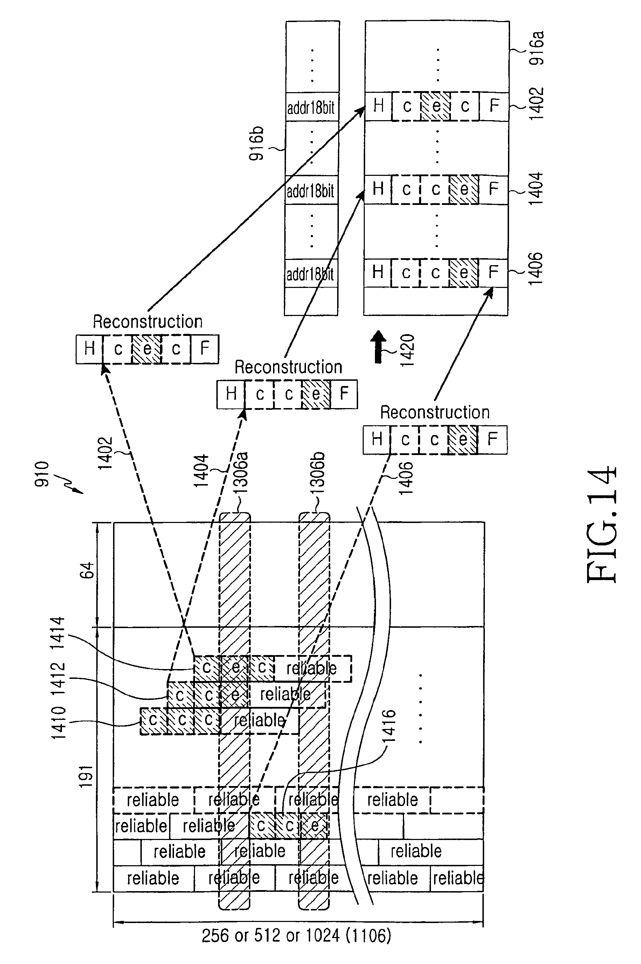

FIG. 14 illustrates updating the section payloads of RS packet data buffered in the failed RS packet buffer 916a, as a result of row-by-row erasure RS decoding of all rows of the MPE-FEC buffer 910 by the erasure RS decoder 912 illustrated in FIG. 13 according to the second exemplary embodiment of the present invention.

Referring to FIG. 14, payloads 1410, 1412, 1414 and 1416 are error-corrected versions of the payloads 1310, 1312, 1314 and 1316 marked with "erasure" in FIG. 13 by the erasure RS decoding. The letter "c" marked in rows of the payloads 1410, 1412, 1414 and 1416 denotes that errors in the rows have been corrected, and the letter "e" marked in rows of the payloads 1410, 1412, 1414 and 1416 denotes that errors still exist in the rows.

The payload 1410 is a payload whose errors have been entirely corrected by the erasure RS decoding of FIG. 13 and the payloads 1412, 1414 and 1415 are payloads whose errors have been partially corrected and thus which have an error in a single row as indicated by reference numerals 1306a and 1306b.

To overwrite the data whose errors have not been perfectly corrected on payloads buffered in the failed RS packet buffer 916a, a header H and a parity F are added to each of the 188-byte payloads 1402, 1404 and 1406, thus reconstructing 204-byte RS packets. In accordance with the second exemplary embodiment of the present invention, the reconstructed RS packets are overwritten in the failed RS packet buffer 916a, as indicated by reference numeral 1420. Therefore, the errors of RS packets failed during the initial RS decoding are reduced.

The RS packets failed in the erasure RS decoding is subject again to RS decoding in the RS decoder 902. The iterative RS decoding increases a decoding success rate, relative to the initial RS decoding of 204-byte RS packets. As a consequence, many RS packets are successfully decoded.

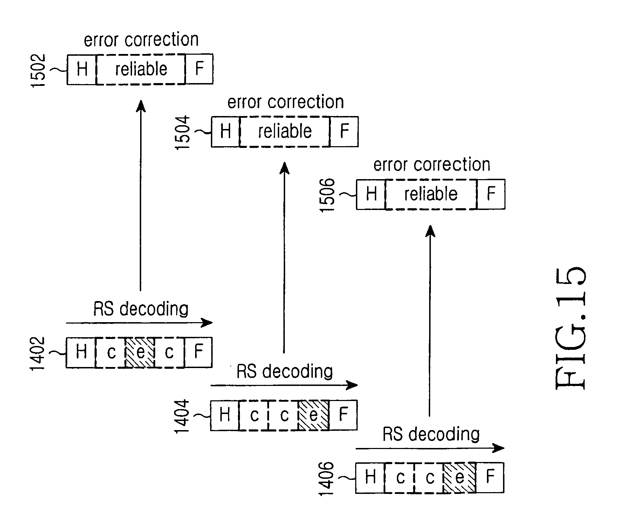

FIG. 15 illustrates iterative RS decoding of the reconstructed RS packets illustrated in FIG. 14 by the RS decoder 902 according to the second exemplary embodiment of the present invention.

Referring to FIG. 15, the 204-byte section data 1402, 1404 and 1406 reconstructed in FIG. 14 are RS-decoded column by column. If the RS decoding is successful, the resulting error-corrected payloads 1502, 1504 and 1506 are marked with "reliable".

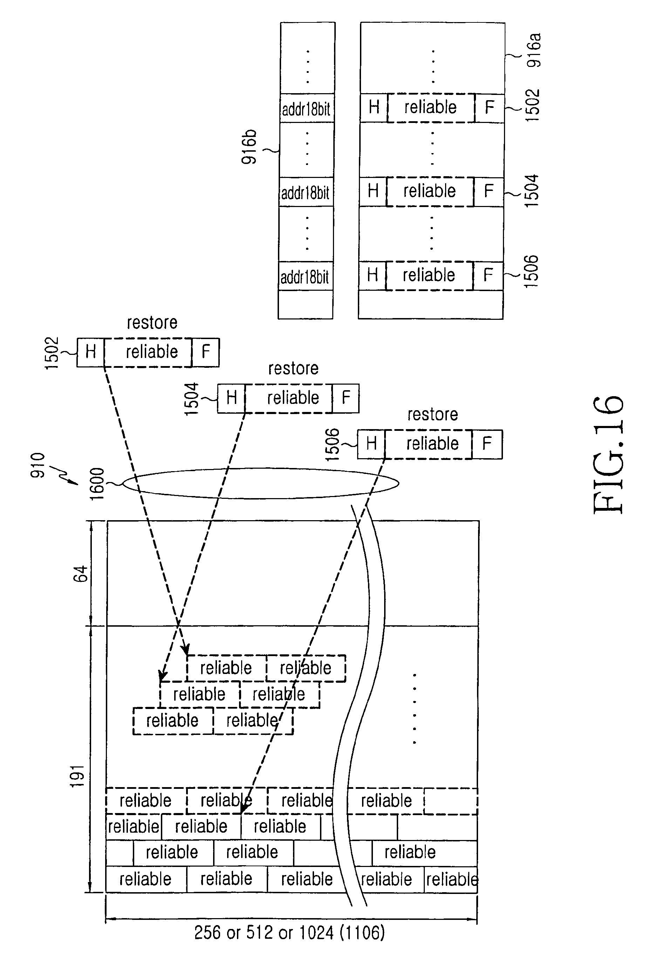

When the RS decoding is successful as illustrated in FIG. 15, the RS packet buffer controller 914 overwrites the successful data at the buffering address of the data buffered in the address buffer 916b in the MPE-FEC payload buffer 910a. This operation is illustrated in FIG. 16.

FIG. 16 illustrates overwriting data for which the iterative RS decoding illustrated in FIG. 15 is successful after the erasure RS decoding at addresses for the data buffered in the address buffer 916b in the MPE-FEC buffer 910 by the RS packet buffer controller 914 according to the second exemplary embodiment of the present invention.

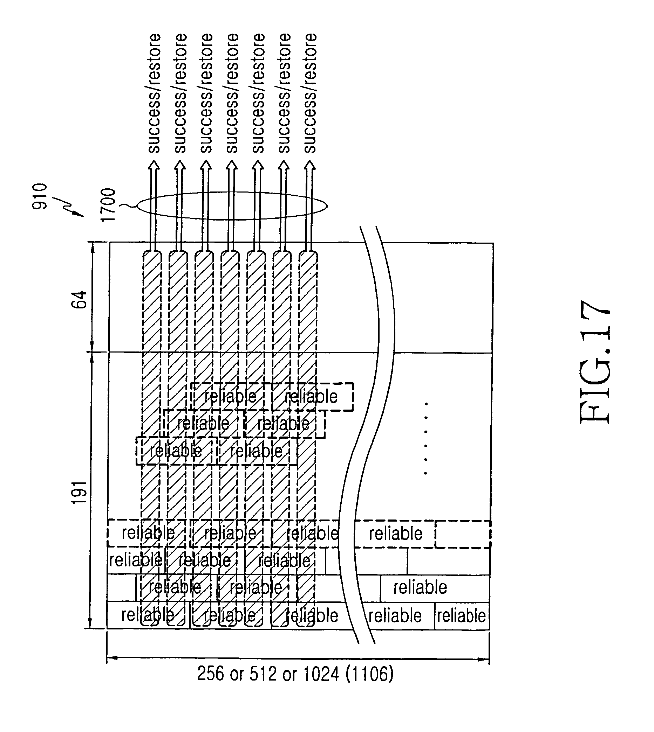

Referring to FIG. 16, reference numeral 1600 denotes overwriting section data that has been overwritten in the failed RS packet buffer 916a in the MPE-FEC buffer 910. The overwritten section payloads have a positive effect on erasure RS decoding of the RS decoder 912. The data whose erasure information is updated from erasure to reliable increases the erasure RS decoding success rate. Hence, when an iterative erasure RS decoding is performed as illustrated in FIG. 17, the number of rows that have failed in the initial erasure RS decoding are now successful increases.

FIG. 17 illustrates successful correction of errors in rows detected during the first RS decoding illustrated in FIG. 11 by iterative decoding the erasure RS decoder 912 according to the second exemplary embodiment of the present invention.

Referring to FIG. 17, the erasure RS decoder 912 performs another erasure RS decoding in an arrowed direction 1700, thereby increasing the decoding success rate of MPE-FEC decoding.

As described above, the second exemplary embodiment of the present invention is characterized by two-dimensional decoding, i.e. column-by-column RS decoding of the RS decoder 902 and row-by-row erasure RS decoding of the erasure RS decoder 912. The error correction by columns in the RS decoder 902 affects positively the result of the row-by-row erasure RS decoding. As the number of iterative RS decodings and erasure RS decodings increases, more data is error-corrected. As a consequence, the error correction capability and reception performance of the DVB-H receiver increase significantly.

As is apparent from the above description, iterative decodings of a digital broadcasting receiver that receives the TS packets enables a improved broadcasting service in a mobile environment.

While the invention has been shown and described with reference to certain exemplary embodiments of the present invention thereof, it will be understood by those skilled in the art that various changes in form and details may be made therein without departing from the spirit and scope of the present invention as defined by the appended claims and their equivalents.

## Claims

1. A method for decoding data in a digital broadcasting receiver, comprising:
(1) buffering first payload data in a first buffer, the first payload data being obtained by Reed-Solomon (RS) decoding of input RS packet data;
(2) buffering packet data failed in the RS decoding in a second buffer;
(3) performing an erasure RS decoding on the first payload data using erasure information indicating whether the first payload data has errors, and if the first payload data has errors, indicating the positions of the errors;
(4) overwriting payload data failed in the erasure RS decoding on payloads of the packet data buffered in the second buffer;
(5) overwriting second payload data in the first buffer, the second payload data being obtained by RS decoding of the overwritten packet data;
(6) performing an erasure RS decoding on the second payload data buffered in the first buffer; and
(7) repeating at leaststep (5) and step (6) until errors of the second payload data are corrected.

2. The method of claim 1, wherein step (1) further comprises buffering the erasure information resulting from the RS decoding in the first buffer.

3. The method of claim 1, wherein step (2) further comprises buffering addresses at which payload data of the failed packet data would have been buffered in the first buffer, if the failed packet data were successful in the RS decoding.

4. The method of claim 1, wherein step (4) further comprises deleting payload data of error-corrected packet data resulting from the erasure RS decoding from the second buffer.

5. The method of claim 1, wherein step (5) comprises overwriting payload data of error-corrected packet data resulting from the RS decoding at addresses where the packet data would have been buffered in the first buffer if the packet data were successful in the RS decoding of step (1).

6. The method of claim 1, wherein step (5) comprises performing the RS decoding on the packet data overwritten in the second buffer by columns.

7. The method of claim 1, wherein step (3) comprises performing the erasure RS decoding on the first payload data buffered in the first buffer by rows.

8. The method of claim 1, wherein step (6) comprises performing the erasure RS decoding on the second payload data buffered in the first buffer by rows.

9. An apparatus for decoding data in a digital broadcasting receiver, comprising:
a Reed-Solomon (RS) decoder for performing an RS decoding on input RS packet data or packet data failed in a previous decoding;
a first buffer for buffering payload data obtained by RS decoding of the RS decoder;
a second buffer for buffering packet data failed in RS decoding of the RS decoder;
an erasure RS decoder for performing an erasure RS decoding on the payload data buffered in the first buffer using erasure information indicating whether the payload data has errors, and if the payload data has errors, indicating the positions of the errors; and
a buffer controller for accessing addresses at which the packet data buffered in the second buffer would have been buffered in the first buffer, if the packet data were successful in RS decoding, after the erasure RS decoding, overwriting payload data failed in the erasure RS decoding at the buffering addresses in the second buffer, and providing the packet data buffered in the second buffer to the RS decoder until errors of the payload data are corrected.

10. The apparatus of claim 9, further comprising a third buffer for buffering the erasure information resulting from the RS decoding.

11. The apparatus of claim 9, further comprising a fourth buffer for buffering the buffering addresses of the first buffer for the failed packet data and providing the buffering addresses to the buffer controller so that the buffer controller reads the payload data failed in the erasure RS decoding and overwrites the read payload data on the payloads of the packet data buffered in the second buffer.

12. The apparatus of claim 10, wherein the erasure RS decoder performs the erasure RS decoding on the payload data buffered in the first buffer by rows using the erasure information buffered in the third buffer.

13. The apparatus of claim 9, wherein the RS decoder performs the RS decoding on the packet data overwritten in the second buffer by columns.
